# EUROPÄISCHE PATENTSCHRIFT

(11) **EP 3 048 415 B1**
(45) Veröffentlichungstag und Bekanntmachung des Hinweises auf die Patenterteilung: **19.07.2017**
(21) Anmeldenummer: 15155746.9
(22) Anmeldetag: 19.02.2015
(51) Int. Cl.: G01B 21/14, B05B 12/08, C23C 4/00, G01B 5/00, G01B 11/06, G01B 11/12

(54) **VERFAHREN UND BESCHICHTUNGSANLAGE ZUM BESCHICHTEN VON HOHLRAUMWÄNDEN**
METHOD AND COATING SYSTEM FOR COATING OF INNER WALLS
PROCÉDÉ ET INSTALLATION DE REVÊTEMENT DESTINÉS AU REVÊTEMENT DE PAROIS DES CAVITÉS

(30) Priorität: 20.01.2015 EP 15151724
(43) Veröffentlichungstag der Anmeldung: 27.07.2016
(73) Patentinhaber: Sturm Maschinen- & Anlagenbau GmbH, 94330 Salching (DE)
(72) Erfinder: Wimmer, Patrick, 93089 Aufhausen (DE); Bernwinkler, Fabian, 84034 Landshut (DE); Kesting, Marc, 94315 Straubing (DE); Völlinger, Ralf, 94315 Straubing (DE); Schütz, Wolfgang, 94339 Leiblfing (DE)
(74) Vertreter: Wunderlich, Rainer

(56) Entgegenhaltungen:
- WO-A1-2009/152851
- DE-A1-102010 025 277
- DE-A1-102013 211 873
- US-A1- 2011 023 777

## Beschreibung

Die vorliegende Erfindung bezieht sich in einem ersten Aspekt auf ein Verfahren zum Beschichten von Hohlraumwänden, insbesondere von Zylinderbohrungen von Motorblöcken.

In einem zweiten Gesichtspunkt betrifft die Erfindung eine Beschichtungsanlage zum Beschichten von Hohlraumwänden, insbesondere von Zylinderbohrungen von Motorblöcken.

Ein solcher Motorblock kann für Verbrennungsmotoren, beispielsweise von Kraftfahrzeugen, verwendet werden. Er umfasst mehrere Zylinderbohrungen, deren Abmessungen und Wandeigenschaften präzise Vorgaben erfüllen sollen, um eine möglichst hohe Effizienz des Verbrennungsmotors zu gewährleisten. Unter einer Zylinderbohrung kann vorliegend allgemein ein zylinderförmiger Hohlraum mit rundem, insbesondere kreisförmigem, Querschnitt verstanden werden. Auf die Innenwand einer Zylinderbohrung wird eine Beschichtung aufgetragen, welche Vorgaben hinsichtlich ihrer Schichtdicke möglichst exakt erfüllen soll.

Die Eigenschaften solch eines beschichteten Hohlraums werden mit einem gattungsgemäßen Verfahren untersucht. Bei einem solchen Verfahren zum Beschichten von Hohlraumwänden, insbesondere Zylinderbohrungen von Motorblöcken, ist vorgesehen, dass mit einer Beschichtungslanze eine Beschichtung auf eine Hohlraumwand aufgetragen wird und mit einer Messvorrichtung ein Hohlraumdurchmesser gemessen wird.

In entsprechender Weise umfasst eine gattungsgemäße Beschichtungsanlage zum Beschichten von Hohlraumwänden, insbesondere Zylinderbohrungen von Motorblöcken, eine Beschichtungslanze zum Auftragen einer Beschichtung auf eine Hohlraumwand und eine Messvorrichtung zum Messen eines Hohlraumdurchmessers.

Eine Beschichtungsanlage, bei welcher die aufgetragene Beschichtung sodann untersucht wird, ist aus DE 199 34 991 A1 bekannt.

In der DE 10 2013 211 873 A1 ist ein Beschichtungsverfahren beschrieben, bei dem eine beschichtete Oberfläche gemessen wird und entsprechende Beschichtungsdaten mit Standardbeschichtungsdaten verglichen werden.

Auch in der US2011/002377 A1 ist ein Beschichtungsverfahren beschrieben. Vor dem Beschichten einer Zylinderbohrung werden in der Bohrung eine aufgeraute Oberfläche und eine Oberfläche zur Qualitätskontrolle des Aufrauens erzeugt.

Die DE 10 2010 025 277 A1 betrifft eine Beschichtungsvorrichtung und eine Beschichtungsverfahren, bei dem eine Schichtdickenmessung vorgesehen ist.

Aus der WO2009/152851 A1 ist eine Messvorrichtung und ein Messverfahren zur Durchmesserbestimmung eines Motorzylinders bekannt.

Nachteilig bei bekannten Beschichtungsanlagen ist, dass die tatsächlichen Abmessungen eines beschichteten Hohlraums oftmals unerwünscht hohe Abweichungen zu Sollwerten haben, welche in einer Überprüfung allenfalls festgestellt, nicht aber vermieden werden.

Als eine **Aufgabe** der Erfindung kann angesehen werden, eine Beschichtungsanlage und ein Verfahren zum Beschichten von Hohlraumwänden anzugeben, mit denen eine Hohlraumwand möglichst präzise beschichtet werden kann.

Diese Aufgabe wird durch die Gegenstände der unabhängigen Ansprüche gelöst.

Vorteilhafte Varianten des erfindungsgemäßen Verfahrens und der erfindungsgemäßen Beschichtungsanlage sind Gegenstand der abhängigen Ansprüche und werden außerdem in der folgenden Beschreibung erläutert.

Bei dem Verfahren der oben genannten Art werden erfindungsgemäß mit der Messvorrichtung zumindest mehrere Durchmesserwerte eines ersten Hohlraums an verschiedenen Höhen des ersten Hohlraums gemessen. Mit der Beschichtungslanze wird sodann auf einer Wand des ersten Hohlraums eine dickenvariable Beschichtung aufgetragen, deren Dicke abhängig ist von den ermittelten Durchmesserwerten.

In entsprechender Weise sind bei der oben genannten Beschichtungsanlage erfindungsgemäß elektronische Steuermittel vorgesehen und dazu eingerichtet,
- mit der Messvorrichtung zumindest mehrere Durchmesserwerte eines ersten Hohlraums an verschiedenen Höhen des ersten Hohlraums aufzunehmen und
- mit der Beschichtungslanze auf einer Wand des ersten Hohlraums eine dickenvariable Beschichtung aufzutragen, deren Dicke abhängig ist von den ermittelten Durchmesserwerten.

Als ein Kerngedanke der Erfindung kann angesehen werden, dass eine Durchmesserermittlung des Hohlraums dazu genutzt wird, eine folgende Beschichtung zu beeinflussen und einem gewünschten Ergebnis näher zu bringen. Hingegen wird bei bekannten Beschichtungsanlagen eine Messung der beschichteten Hohlraumwand in der Regel lediglich für eine Qualitätsbewertung verwendet, nicht aber für eine Verbesserung folgender Beschichtungsvorgänge.

Grundsätzlich treten zwei Ungenauigkeiten bei der Herstellung beschichteter Hohlkörper ein, von denen eine oder beide durch die Erfindung vorteilhafterweise reduziert werden können. So kann einerseits ein Hohlraumdurchmesser vor dem Beschichten von einem gewünschten Durchmesser abweichen. Insbesondere kann der Hohlraumdurchmesser über die Höhe des Hohlraums ungewünscht schwanken. Diese ungewünschte Abweichung bleibt selbst dann bestehen, wenn nun eine Beschichtung aufgetragen würde, die keinerlei Ungenauigkeiten in ihrer Dicke und eine exakt konstante Dicke über die Höhe des Hohlraums hat.

Als zweite Ungenauigkeit bei der Herstellung beschichteter Hohlkörper kommt hinzu, dass eine Dicke einer aufgetragenen Beschichtung grundsätzlich eine Abweichung zu einer gewünschten Dicke aufweist. Insbesondere kann es zu ungewollten Schwankungen der Beschichtungsdicke über die Höhe des Hohlraums kommen. Dies kann insbesondere durch Luftwirbel während dem Auftragen der Beschichtung bedingt sein. Diese können beispielsweise durch eine Absaugung während dem Beschichten hervorgerufen werden.

Vorteilhafterweise können mit der Erfindung beide oder zumindest eine der vorgenannten Ungenauigkeiten verringert werden. So kann ein höhenabhängiger Hohlraumdurchmesser vor dem Beschichten erfasst werden und es kann eine Abweichung zu einem gewünschten Hohlraumdurchmesser berechnet werden. Die sodann aufzutragende Beschichtung wird so erzeugt, dass diese Abweichung zumindest teilweise, vorzugsweise vollständig, kompensiert wird.

Alternativ oder zusätzlich kann auch eine höhenabhängige Durchmesserermittlung nach Auftragen der Beschichtung erfolgen. Dadurch kann eine Abweichung der aufgetragenen Beschichtung von einer gewünschten Beschichtung ermittelt werden. Bei einem folgenden Beschichten einer nächsten Hohlraumwand kann nun die aufzutragende Beschichtung so erzeugt werden, dass die soeben genannte Abweichung zumindest teilweise, vorzugsweise vollständig, kompensiert wird.

Das erfindungsgemäße Steuern des Beschichtens kann daher auch eine Regelung darstellen. Hierbei ist der Hohlraumdurchmesser nach Auftragen der Beschichtung die Regelgröße, das heißt die zu beeinflussende Größe. Diese wird gemessen und es wird eine Differenz zu einem gewünschten Wert berechnet. Mit der Differenz wird sodann eine Stellgröße berechnet, welche hier die höhenabhängige Dicke der aufzutragenden Beschichtung (einer nächsten Hohlraumwand) ist.

Werden Durchmesserwerte eines ersten Hohlraums an verschiedenen Höhen allein vor Auftragen einer Beschichtung gemessen, so werden diese Durchmesserwerte dazu verwendet, das Auftragen einer dickenvariablen Beschichtung auf die Wand desselben (ersten) Hohlraums zu beeinflussen. Werden hingegen Durchmesserwerte nach oder sowohl vor als auch nach Auftragen einer Beschichtung gemessen, so können diese Durchmesserwerte dazu verwendet werden, das Auftragen einer dickenvariablen Beschichtung auf die Wand einen folgenden (zweiten) Hohlraums zu beeinflussen.

Unter einer Beschichtungslanze kann vorliegend eine beliebige Einrichtung verstanden werden, welche in einen zu beschichtenden Hohlraum eingefahren werden kann und sodann Beschichtungspartikel in Richtung der Hohlraumwand abgeben kann. Die Beschichtungslanze kann insbesondere eine längliche Form mit einer Ausgabeöffnung haben, welche in eine Richtung quer, insbesondere senkrecht, zur Längsrichtung der Beschichtungslanze zeigt. Die ausgestoßenen Beschichtungspartikel können insbesondere Metallpartikel umfassen, die in einem Plasmastrahl befördert werden. Es kann vorgesehen sein, dass die Beschichtungslanze während einem Beschichtungsvorgang rotiert und in der Höhe verstellt wird.

Die Messvorrichtung kann einen oder mehrere prinzipiell beliebige Sensoren zum Ermitteln eines Hohlraumdurchmessers aufweisen. Dabei ist relevant, dass die Messvorrichtung den Hohlraumdurchmesser höhenabhängig, also an verschiedenen Höhen entlang der Längsachse des Hohlraums, ermitteln kann. Grundsätzlich kann bereits ein einziger abstandsmessender Sensor genügen, der seinen Abstand zur Hohlraumwand misst. Aus diesem Abstand kann sodann der Durchmesser berechnet werden. Dieses Vorgehen ist aber verhältnismäßig ungenau, wenn die Messvorrichtung nicht zentral, sondern mit einer Abweichung zur Mittelachse in den Hohlraum eingefahren wird. Um auch in einem solchen Fall den Durchmesser präzise ermitteln zu können, können vorzugsweise mindestens drei abstandsmessende Sensoren vorhanden sein. Diese können insbesondere optisch, beispielsweise nach dem Triangulationsprinzip, einen Abstand messen. Die Sensoren können so an der Messvorrichtung angeordnet sein, dass ihre Messrichtungen quer oder senkrecht zu einer Längsachse der Messvorrichtung liegen und sich in einem Winkel um die Längsachse unterscheiden. Jeder dieser Sensoren misst in seiner Messrichtung eine Entfernung zur Hohlraumwand. Bei einer Abweichung der Messvorrichtung zur Mittelachse des Hohlraums misst einer der Sensoren eine kleinere Entfernung, ein anderer der Sensoren hingegen eine größere Entfernung. Dadurch kann diese Abweichung herausgerechnet werden und der Hohlraumdurchmesser kann präzise bestimmt werden.

Unter einer dickenvariablen Beschichtung kann vorliegend verstanden werden, dass die Dicke der Beschichtung nicht konstant ist, sondern insbesondere über eine Höhe der Hohlraumwand, an welcher die Beschichtung aufgetragen wird, variiert.

Im Sinne der Erfindung sind solche Maße als äquivalent zum Durchmesser des Hohlraums anzusehen, wenn aus diesen Maßen der Durchmesser ableitbar ist. Hierunter zählen insbesondere der Radius, der Umfang oder die Querschnittsfläche des Hohlraums an einer untersuchten Höhe. Die Höhe ist entlang einer Längsachse des Hohlraums zu verstehen, welcher üblicherweise eine zylindrische oder zumindest regelmäßige Form hat. Wie beschrieben, kann an der zylindrischen Form eine ungewünschte Abweichung vorliegen, durch welche beispielsweise ein konischer Zylinder vorliegen kann oder ein Zylinder mit zwar stets kreisförmigem Querschnitt, dessen Durchmesser aber über die Höhe hinweg insbesondere unregelmäßig schwankt.

Erfindungsgemäß werden die mehreren Durchmesserwerte am ersten Hohlraum gemessen, bevor auf dessen Wand eine Beschichtung aufgetragen wird. Die dickenvariable Beschichtung wird sodann an demselben ersten Hohlraum aufgetragen, an dem die mehreren Durchmesserwerte gemessen wurden.

Alternativ oder ergänzend kann vorgesehen sein, dass mehrere Durchmesserwerte am ersten Hohlraum gemessen werden, nachdem auf dessen Wand eine Beschichtung aufgetragen worden ist. Die dickenvariable Beschichtung kann nun auf eine Wand eines zweiten Hohlraums aufgetragen werden, welche nach Beschichten der Wand des ersten Hohlkörpers beschichtet wird. Das Beschichten der Wand des ersten Hohlraums kann hierbei prinzipiell mit konstanter Dicke oder bevorzugt wie zuvor beschrieben mit einer Dicke abhängig vom Durchmesser des Hohlraums vor dem Beschichten erfolgen.

Es ist vorteilhaft, dass eine Dicke der dickenvariablen Beschichtung an einer bestimmten Höhe umso dicker gewählt wird, je größer der zuvor gemessene Durchmesserwert für diese Höhe ist. Demnach ist die Beschichtung an Stellen dicker, an denen der Durchmesser, das heißt Innendurchmesser, des unbeschichteten Hohlraums oder eines anderen bereits beschichteten Hohlraums (was später näher beschrieben wird) größer ist. Hierdurch kann vorteilhafterweise erreicht werden, dass über die Höhe des Hohlraums hinweg ein möglichst konstanter Durchmesser nach dem Beschichten erreicht wird.

Vorzugsweise wird die dickenvariable Beschichtung so aufgetragen, dass ihre variable Dicke Unterschiede der Durchmesserwerte zumindest teilweise, vorzugsweise vollständig, kompensiert. Das teilweise Kompensieren soll so verstanden werden, dass Durchmesserunterschiede über die Höhe des beschichteten Hohlraums geringer sind im Vergleich zu dem Fall, dass derselbe Hohlraum mit einer Beschichtung konstanter Dicke beschichtet würde. Ein vollständiges Kompensieren kann dahingehend aufgefasst werden, dass eine Summe aus einem Durchmesserwert des unbeschichteten Hohlraums und der zu dieser Höhe zugehörigen Beschichtungsdicke für alle Höhen denselben Wert ergibt. In anderen Worten hat in diesem Fall der beschichtete Hohlraum über seine Höhe hinweg denselben Durchmesser. Es wird demnach die dickenvariable Beschichtung so auf die Hohlraumwände aufgetragen, dass ein beschichteter Hohlraum einen weitgehend konstanten Hohlraumdurchmesser hat. Nacheinander beschichtete Hohlräume können sich in ihren Beschichtungsdicken so unterscheiden, dass unterschiedliche Durchmesser vor dem Beschichten kompensiert werden und demnach die beschichteten Hohlräume einen weitgehend gleichen Hohlraumdurchmesser aufweisen.

Unter der Abhängigkeit der dickenvariablen Beschichtung von den ermittelten Durchmesserwerten kann auch eine Abhängigkeit von aus den ermittelten Durchmesserwerten abgeleiteten Werten aufgefasst werden. Diese Werte können insbesondere höhenabhängige Beschichtungsdicken am ersten Hohlraum sein. Die höhenabhängigen Beschichtungsdicken können ermittelt werden, indem Durchmesserwerte am selben Hohlraum vor und nach Auftragen einer Beschichtung gemessen werden und sodann die Differenz zwischen diesen Durchmesserwerten bestimmt wird.

Um diese Merkmale zu realisieren, kann vorgesehen sein:
- dass mit der Messvorrichtung mehrere Durchmesserwerte des ersten Hohlraums an verschiedenen Höhen des ersten Hohlraums vor und nach Auftragen einer Beschichtung aufgenommen werden,
- dass aus diesen Durchmesserwerten vor und nach Auftragen einer Beschichtung eine höhenabhängige Beschichtungsdicke ermittelt wird,
- dass die Beschichtungslanze so angesteuert wird, dass mit dieser auf einer Wand des zweiten Hohlraums eine dickenvariable Beschichtung aufgetragen wird, deren Dicke abhängig ist von der ermittelten höhenabhängigen Beschichtungsdicke.

Mit dieser Ausführung wird dem Problem entgegengetreten, dass eine tatsächliche Beschichtungsdicke in der Regel abweicht von einer beabsichtigten oder gewünschten Beschichtungsdicke. Diese Abweichung kann festgestellt und berücksichtigt werden. Wird beispielsweise gemessen, dass eine tatsächliche Beschichtungsdicke an einer bestimmten Höhe kleiner ist als beabsichtigt, so wird die Beschichtungsdicke für einen nächsten (insbesondere zweiten) Hohlraum größer gewählt. Dieser Vorgang kann wiederholt werden: Ist die Beschichtungsdicke an dieser Höhe noch immer nicht groß genug, wird die Beschichtungsdicke für diese Höhe beim wiederum nächsten Hohlraum erneut erhöht.

Bei einer bevorzugten Variante der Erfindung werden mehrere der vorgenannten Ausführungen kombiniert. Insbesondere kann vorgesehen sein, dass eine höhenabhängige Beschichtung sowohl abhängig von Durchmesserwerten des Hohlraums vorm Beschichten als auch abhängig von Durchmesserwerten des zuletzt untersuchten bereits beschichteten Hohlraums gewählt wird. Eine bevorzugte Variante umfasst die folgenden Schritte:
Zunächst werden mehrere Durchmesserwerte am ersten Hohlraum gemessen, bevor auf diesen eine Beschichtung aufgetragen wird. Sodann wird die dickenvariable Be-schichtung auf denselben ersten Hohlraum aufgetragen, wobei deren höhenabhängige Dicke von den Durchmesserwerten vor Auftragen der Beschichtung abhängig gewählt wird. Es werden nun mehrere Durchmesserwerte am ersten Hohlraum gemessen, nachdem auf dessen Wand die genannte Beschichtung aufgetragen worden ist. Aus den Durchmesserwerten vor und nach Auftragen der Beschichtung wird eine höhenabhängige Beschichtungsdicke ermittelt. Mit der ermittelten höhenabhängigen Beschichtungsdicke wird eine Differenz zu einer gewünschten höhenabhängigen Beschichtungsdicke berechnet. Die Differenz wird beim Auftragen einer Beschichtung auf eine nächste Hohlraumwand berücksichtigt. Insbesondere wird die Dicke der Beschichtung auf der nächsten Hohlraumwand so gewählt, dass bei wiederholter Ausführung dieser Verfahrensschritte die genannte Differenz verkleinert wird.

Die dickenvariable Beschichtung kann in prinzipiell beliebiger Weise erzeugt werden. Um grundsätzlich bekannte Beschichtungslanzen in einfacher Weise für die Erfindung verwenden zu können, wird vorzugsweise eine Verfahrgeschwindigkeit oder Partikelausstoßleistung der Beschichtungslanze variiert.

Die als zusätzliche Vorrichtungsmerkmale beschriebenen Eigenschaften der Erfindung sind auch als Varianten des erfindungsgemäßen Verfahrens aufzufassen, und umgekehrt. Insbesondere sind bei bevorzugten Ausführungen der erfindungsgemäßen Beschichtungsanlage die elektronischen Steuermittel dazu eingerichtet, eine oder mehrere der oben beschriebenen Schritte auszuführen, das heißt insbesondere, die Beschichtungslanze und die Messvorrichtung entsprechend anzusteuern.

Im Rahmen der vorliegenden Beschreibung sollen Begriffe wie "Hohlraumwand" und "Wand eines Hohlraums" als gleichbedeutend angesehen werden. Gleiches gilt für Begriffspaare wie "Hohlraumdurchmesser" und "Durchmesser eines Hohlraums".

Die Erfindung ist in den Ansprüchen 1 und 10 definiert.

Weitere Vorteile und Merkmale der Erfindung werden nachstehend mit Bezug auf die beigefügten schematischen Figuren beschrieben. Hierin zeigen:
- Fig. 1: eine Messvorrichtung einer erfindungsgemäßen Beschichtungsanlage in einem noch nicht beschichteten Hohlraum;
- Fig. 2: eine Beschichtungslanze einer erfindungsgemäßen Beschichtungsanlage in einem gemäß dem Verfahren der Erfindung beschichteten Hohlraum;
- Fig. 3: eine Messvorrichtung einer erfindungsgemäßen Beschichtungsanlage in einem beschichteten Hohlraum;
- Fig. 4: einen gemäß dem Verfahren der Erfindung beschichteten Hohlraum.

Gleiche und gleich wirkende Bestandteile sind in den Figuren in der Regel mit denselben Bezugszeichen gekennzeichnet.

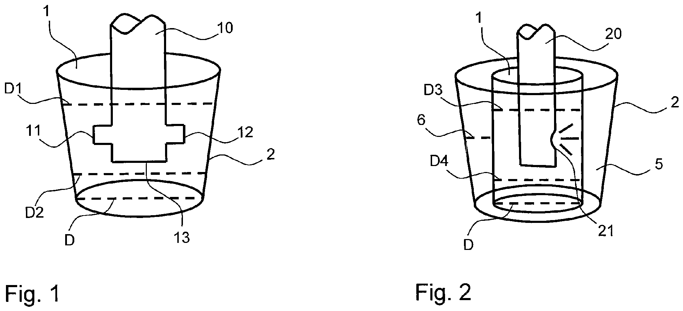

Fig. 1 zeigt schematisch eine Messvorrichtung 10 eines Ausführungsbeispiels einer erfindungsgemäßen Beschichtungsanlage. Die Messvorrichtung 10 ist in einen Hohlraum 1 eingefahren, bei dem es sich um eine Zylinderbohrung 1 von insbesondere einem Motorblock handeln kann.

Seitenwände 2 des Hohlraums sollen beschichtet werden, wodurch gewünschte Wandeigenschaften erreicht werden können, die beispielsweise eine Motoreffizienz verbessern können.

Die Seitenwände 2 werden durch die Mantelfläche des Hohlraums 1 gebildet und vorliegend auch kurz als Wand 2 bezeichnet.

Vor dem Beschichten der Wand 2 wird mit der Messvorrichtung 10 ein Durchmesser D des Hohlraums 1 ermittelt. Hierzu umfasst die Messvorrichtung 10 insbesondere Sensoren 11 und 12. Weitere Messmittel 13 können für zusätzliche Überprüfungen von Wandeigenschaften vorhanden sein, beispielsweise hinsichtlich der Rauigkeit.

Die Messvorrichtung 10 hat einen länglichen Körper, damit sie in die zu untersuchenden Hohlräume 1 eingefahren werden kann. Die Sensoren 11 und 12 sind vorzugsweise als abstandsmessende Sensoren gebildet. Sie ermitteln ihren Abstand zur Wand 2, woraus auf den Durchmesser D geschlossen werden kann. Bevorzugt sind drei abstandsmessende Sensoren vorhanden, von denen bloß zwei Sensoren 11 und 12 dargestellt sind. Dadurch ist es nicht erforderlich, dass die Messvorrichtung 10 zentral in den Hohlraum 1 eingefahren wird, um den Durchmesser D präzise zu ermitteln.

Für eine höhere Messgenauigkeit ist es vorteilhaft, wenn die Sensoren 11 und 12 in einer Ebene senkrecht zu einer Längsachse der länglichen Messvorrichtung 10 verstellbar sind. Hierdurch können die Sensoren 11 und 12 näher an die Wand 2 bewegt werden.

Dadurch können hochpräzise Sensoren 11 und 12 verwendet werden, die jedoch einen verhältnismäßig kleinen Messbereich haben und daher für eine Abstandsmessung nah zur Wand 2 bewegt werden müssen.

Ein tatsächlicher Durchmesser D des Hohlraums 1 weist in der Regel eine Abweichung zu einem Sollwert des Durchmessers auf. Zudem kann der Durchmesser D eine unerwünschte Höhenabhängigkeit haben, das heißt der Durchmesser hat über die Höhe des Hohlraums 1 hinweg verschiedene Werte. Dies ist in Fig. 1 zur besseren Sichtbarkeit nicht maßstabsgerecht dargestellt.

Um die Höhenabhängigkeit des Durchmessers D zu erfassen, wird die Messvorrichtung 10 in ihrer Höhe verstellt und nimmt mehrere Durchmesserwerte D1 und D2 zu verschiedenen Höhen auf.

Die Kenntnis des höhenabhängigen Durchmessers D kann nun bei einem darauffolgenden Beschichten der Wand 2 genutzt werden.

Dies wird mit Bezug auf Figur 2 erläutert. Figur 2 zeigt den Hohlraum 1 aus Fig. 1, wobei von einer schematisch dargestellten Beschichtungslanze 20 eine Beschichtung 5 auf die Wand 2 aufgetragen wird.

Die Beschichtungslanze 20 weist eine Ausgabeöffnung 21 auf, aus welcher Beschichtungspartikel in Richtung der Wand 2 ausgestoßen werden. Insbesondere können Metallpartikel in einem Plasmastrahl abgegeben werden.

Herkömmlicherweise würde eine Soll-Beschichtungsdicke einen konstanten Wert über die Höhe des Hohlraums aufweisen. Durch eine solche Beschichtung wäre aber die unerwünschte Höhenabhängigkeit eines Innendurchmessers des beschichteten Hohlraums weiterhin gegeben. Hingegen wird erfindungsgemäß eine dickenvariable Beschichtung 5 erzeugt, deren Dicke 6 über die Höhe des Hohlraums 1 hinweg variiert. Diese Dickenvariation wird abhängig von den zuvor ermittelten Durchmesserwerten D1 und D2 des unbeschichteten Hohlraums 2 gewählt. Insbesondere kann die Dickenvariation gerade so erfolgen, dass Unterschiede zwischen den Durchmessern D1 und D2 ausgeglichen werden, wie in Fig. 2 dargestellt. Dadurch wird über die Höhe des Hohlraums 2 hinweg ein konstanter Durchmesser D3 und D4 erzielt.

Vorteilhafterweise kann demnach die Durchmesserermittlung dazu verwendet werden, eine Höhenabhängigkeit des Innendurchmessers D eines Hohlraums 1 zu verringern oder sogar vollständig zu beseitigen.

Außer der Höhenabhängigkeit kann auch eine Abweichung zu einem Sollwert des Durchmessers eines beschichteten Hohlraums erreicht werden: Hierzu wird zu jedem der Durchmesserwerte D1 und D2 des unbeschichteten Hohlraums 1 die jeweilige Differenz zum Sollwert berechnet. Die Dicke 6 der Beschichtung wird nun so gewählt, dass sie an den verschiedenen Höhen gerade gleich der jeweiligen soeben genannten Differenz ist.

Ungenauigkeiten, die sich auf den Innendurchmesser D eines beschichteten Hohlraums 1 auswirken, können sich jedoch auch durch den Beschichtungsvorgang ergeben. So weicht in der Regel eine tatsächliche Beschichtungsdicke 6 von einer vorgegebenen gewünschten Beschichtungsdicke ab. Dies kann beispielsweise durch Luftströmungen im Hohlraum 1 bedingt sein.

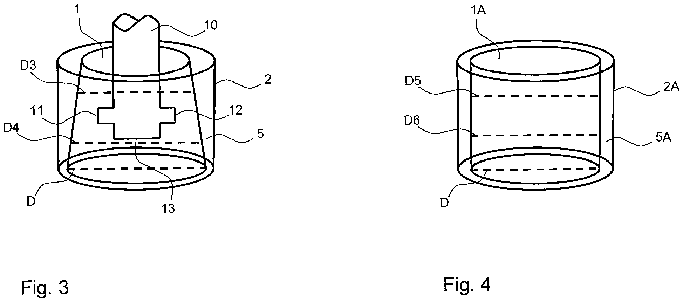

Diese Problematik ist in Fig. 3 dargestellt. Diese Figur zeigt einen beschichteten Hohlraum 1. Der Durchmesser D dieses beschichteten Hohlraums 1 hat unerwünschterweise eine Höhenabhängigkeit. Wie erläutert, kann dies unabhängig davon eintreten, ob ein Durchmesser des unbeschichteten Hohlraums 1 einen konstanten Wert hat (wie in Fig. 3 der Fall) oder eine Höhenabhängigkeit aufweist (wie in Fig. 1 und 2 der Fall).

Der höhenabhängige Durchmesser D des beschichteten Hohlraums 1 (das heißt der Durchmesser des von der Beschichtung 5 umschlossenen Freiraums) wird nun mit der Messvorrichtung 10 an verschiedenen Höhen gemessen. Beispielhaft sind wiederum die Durchmesser D3 und D4 an verschiedenen Höhen eingezeichnet.

Die Kenntnis dieser Werte gibt Auskunft darüber, wie eine tatsächliche Beschichtungsdicke 6 von einer gewünschten Beschichtungsdicke abweicht. Hierzu können auch Durchmesserwerte D1 und D2 vor dem Beschichten und Durchmesserwerte D3 und D4 nach dem Beschichten an demselben Hohlraum 1 gemessen werden und durch Differenzbildung die tatsächliche Beschichtungsdicke 6 berechnet werden.

Ein Vergleich der tatsächlichen Beschichtungsdicke 6 mit einer gewünschten Beschichtungsdicke kann nun bei der Steuerung eines nächsten Beschichtungsvorgangs an einem nächsten Hohlraum verwendet werden.

Während Fig. 3 einen ersten Hohlraum 1 mit einer ersten Beschichtung 5 zeigt, ist in Fig. 4 ein nächster (zweiter) Hohlraum 1A gezeigt, auf dessen Wand 2A eine zweite Beschichtung 5A aufgetragen wird. Beim Auftragen der Beschichtung 5A wird dabei der vorgenannte Vergleich der tatsächlichen Beschichtungsdicke 6 mit einer gewünschten Beschichtungsdicke des ersten Hohlraums 1 berücksichtigt. Insbesondere kann die Beschichtungslanze 20 so angesteuert werden, dass an einer Höhe, an welcher die tatsächliche Beschichtungsdicke 6 am ersten Hohlraum 1 zu niedrig war, eine dickere Beschichtung 5A am zweiten Hohlraum 1A erzeugt wird.

Hierdurch ist es vorteilhafterweise möglich, unerwünschte Abweichungen der tatsächlichen Beschichtungsdicke von einer gewünschten Beschichtungsdicke zu vermeiden.

Besonders präzise Ergebnisse können erzielt werden, wenn eine dickenvariable Beschichtung einerseits abhängig von dem soeben erläuterten Vergleich der tatsächlichen Beschichtungsdicke mit einer gewünschten Beschichtungsdicke des vorhergehenden Hohlraums (beschrieben zu den Figuren 3 und 4) und andererseits abhängig von den höhenabhängigen Durchmesserwerten des unbeschichteten, aktuell zu beschichtenden Hohlraums gewählt wird (beschrieben zu den Figuren 1 und 2). In dieser Weise kann erreicht werden, dass ein Durchmesser eines beschichteten Hohlraums über dessen Höhe hinweg einen vorgegebenen, insbesondere konstanten, Wert präzise annimmt.

## Patentansprüche

1. Verfahren zum Beschichten von Hohlraumwänden (2), insbesondere Zylinderbohrungen von Motorblöcken, bei dem
- mit einer Beschichtungslanze (20) eine Beschichtung (5) auf eine Hohlraumwand (2) aufgetragen wird und
- mit einer Messvorrichtung (10) ein Hohlraumdurchmesser (D) gemessen wird,
- wobei mit der Messvorrichtung (10) zumindest mehrere Durchmesserwerte (D1, D2) eines ersten Hohlraums (1) an verschiedenen Höhen des ersten Hohlraums (1) gemessen werden,
- **dadurch gekennzeichnet, dass**
- mit der Beschichtungslanze (20) auf einer Wand (2) desselben ersten Hohlraums (1) eine dickenvariable Beschichtung (5) aufgetragen wird, deren Dicke (6) abhängig ist von den ermittelten Durchmesserwerten (D1, D2),
- wobei die mehreren Durchmesserwerte (D1, D2) am ersten Hohlraum (1) gemessen werden, bevor auf diesen die dickenvariable Beschichtung (5) aufgetragen wird, und
- dass die Dicke (6) der dickenvariablen Beschichtung (5) an einer bestimmten Höhe des ersten Hohlraums (1) umso dicker gewählt wird, je größer der zuvor gemessene Durchmesserwert für diese Höhe ist.

2. Verfahren nach Anspruch 1,
**dadurch gekennzeichnet,**
**dass** mit der Beschichtungslanze (20) auf einer Wand (2A) eines zweiten Hohlraums (1A) eine dickenvariable Beschichtung (5A) aufgetragen wird, deren Dicke (6) abhängig ist von den ermittelten Durchmesserwerten (D1, D2).

3. Verfahren nach Anspruch 1 oder 2,
**dadurch gekennzeichnet,**
**dass** mehrere Durchmesserwerte (D3, D4) am ersten Hohlraum (1) gemessen werden, nachdem auf dessen Wand (2) eine Beschichtung (5) aufgetragen worden ist, und
**dass** eine dickenvariable Beschichtung (5A) auf eine Wand (2A) eines zweiten Hohlraums (1A) aufgetragen wird.

4. Verfahren nach einem der Ansprüche 1 bis 3,
**dadurch gekennzeichnet,**
**dass** die dickenvariable Beschichtung (5) so aufgetragen wird, dass ihre variable Dicke (6) Unterschiede der Durchmesserwerte (D1, D2; D3, D4) an verschiedenen Höhen zumindest teilweise kompensiert.

5. Verfahren nach einem der Ansprüche 1 bis 4,
**dadurch gekennzeichnet,**
**dass** die dickenvariable Beschichtung (5) so auf die Hohlraumwand (2) aufgetragen wird, dass der beschichtete Hohlraum (1) einen weitgehend konstanten Hohlraumdurchmesser (D) aufweist.

6. Verfahren nach einem der Ansprüche 1 bis 5,
**dadurch gekennzeichnet,**
**dass** dickenvariable Beschichtungen (5) auf Hohlraumwänden (2) mehrerer Hohlräume (1) aufgetragen werden, wobei die dickenvariablen Beschichtungen (5) so ausgebildet werden, dass Hohlraumdurchmesser (D) der beschichteten Hohlräume (1) weitgehend miteinander übereinstimmen.

7. Verfahren nach einem der Ansprüche 1 bis 6,
**dadurch gekennzeichnet,**
- **dass** mit der Messvorrichtung (10) mehrere Durchmesserwerte (D1, D2; D3, D4) des ersten Hohlraums (1) an verschiedenen Höhen des ersten Hohlraums (1) vor und nach Auftragen einer Beschichtung (5) aufgenommen werden,
- **dass** aus diesen Durchmesserwerten (D1, D2; D3, D4) vor und nach Auftragen einer Beschichtung (5) eine höhenabhängige Beschichtungsdicke (6) ermittelt wird,
- **dass** die Beschichtungslanze (20) so angesteuert wird, dass mit dieser auf einer Wand (2A) des zweiten Hohlraums (1A) eine dickenvariable Beschichtung (5A) aufgetragen wird, deren Dicke abhängig ist von der ermittelten höhenabhängigen Beschichtungsdicke (6).

8. Verfahren nach einem der Ansprüche 1 bis 7,
**dadurch gekennzeichnet,**
- **dass** zunächst mehrere Durchmesserwerte (D1, D2) am ersten Hohlraum (1) gemessen werden, bevor auf diesen eine Beschichtung (5) aufgetragen wird,
- **dass** die dickenvariable Beschichtung (5) auf denselben ersten Hohlraum (1) aufgetragen wird, wobei deren höhenabhängige Dicke (6) von den Durchmesserwerten (D1, D2) vor Auftragen der Beschichtung (5) abhängig gewählt wird,
- **dass** mehrere Durchmesserwerte (D3, D4) am ersten Hohlraum (1) gemessen werden, nachdem auf dessen Wand (2) die Beschichtung (5) aufgetragen worden ist,
- **dass** aus den Durchmesserwerten (D1, D2; D3, D4) vor und nach Auftragen der Beschichtung (5) eine höhenabhängige Beschichtungsdicke (6) ermittelt wird,
- **dass** mit der ermittelten höhenabhängigen Beschichtungsdicke (6) eine Differenz zu einer gewünschten höhenabhängigen Beschichtungsdicke berechnet wird,
- **dass** die Differenz beim Auftragen einer Beschichtung (5A) auf eine nächste Hohlraumwand (2A) berücksichtigt wird.

9. Verfahren nach einem der Ansprüche 1 bis 8,
**dadurch gekennzeichnet,**
**dass** eine dickenvariable Beschichtung (5) dadurch erzeugt wird, dass eine Verfahrgeschwindigkeit oder Partikelausstoßleistung der Beschichtungslanze (20) variiert wird.

10. Beschichtungsanlage zum Beschichten von Hohlraumwänden (2), insbesondere Zylinderbohrungen von Motorblöcken, mit
- einer Beschichtungslanze (20) zum Auftragen einer Beschichtung (5) auf eine Hohlraumwand (2) und
- einer Messvorrichtung (10) zum Messen eines Hohlraumdurchmessers (D), wobei elektronische Steuermittel vorgesehen und dazu eingerichtet sind,
- mit der Messvorrichtung (10) zumindest mehrere Durchmesserwerte (D1, D2) eines ersten Hohlraums (1) an verschiedenen Höhen des ersten Hohlraums (1) aufzunehmen,
**dadurch gekennzeichnet,**
**dass** die elektronischen Steuermittel vorgesehen und dazu eingerichtet sind,
- mit der Beschichtungslanze (20) auf einer Wand (2) desselben ersten Hohlraums (1) eine dickenvariable Beschichtung (5) aufzutragen, deren Dicke (6) abhängig ist von den ermittelten Durchmesserwerten (D1, D2),
- **dass** die mehreren Durchmesserwerte (D1, D2) am ersten Hohlraum (1) gemessen werden, bevor auf diesen die dickenvariable Beschichtung (5) aufgetragen wird, und
- **dass** die Dicke (6) der dickenvariablen Beschichtung (5) an einer bestimmten Höhe des ersten Hohlraums (1) umso dicker gewählt wird, je größer der zuvor gemessene Durchmesserwert für diese Höhe ist.

11. Beschichtungsanlage nach Anspruch 10,
**dadurch gekennzeichnet,**
**dass** die elektronischen Steuermittel dazu eingerichtet sind, ein Verfahren nach einem der Ansprüche 1 bis 9 auszuführen.

## Claims

1. Method for coating cavity walls (2), in particular cylinder bores of engine blocks, in which
- a coating (5) is applied to a cavity wall (2) with a coating lance (20) and
- a cavity diameter (D) is measured with a measuring device (10),
- wherein at least several diameter values (D1, D2) of a first cavity (1) are measured with the measuring device (10) at different heights of the first cavity (1),
**characterized in that**
- with the coating lance (20) a variable-thickness coating (5) is applied to a wall (2) of the same first cavity (1), the thickness (6) of the said variable-thickness coating being dependent on the diameter values (D1, D2) determined,
- wherein the several diameter values (D1, D2) are measured on the first cavity (1) before the variable-thickness coating (5) is applied thereto, and
- **in that** the thickness (6) of the variable-thickness coating (5) is chosen the thicker at a particular height of the first cavity (1) the larger the previously measured diameter value for this height is.

2. Method according to claim 1,
**characterized in that**
with the coating lance (20) a variable-thickness coating (5A) is applied to a wall (2A) of a second cavity (1A), the thickness (6) of the said variable-thickness coating being dependent on the diameter values (D1, D2) determined.

3. Method according to claim 1 or 2,
**characterized in that**
several diameter values (D3, D4) are measured on the first cavity (1) after a coating (5) has been applied to its wall (2) and
**in that** a variable-thickness coating (5A) is applied to a wall (2A) of a second cavity (1A).

4. Method according to any one of claims 1 to 3,
**characterized in that**
the variable-thickness coating (5) is applied such that its variable thickness (6) compensates at least partially for differences of the diameter values (D1, D2; D3, D4) at different heights.

5. Method according to any one of claims 1 to 4,
**characterized in that**
the variable-thickness coating (5) is applied to the cavity wall (2) such that the coated cavity (1) has a substantially constant cavity diameter (D).

6. Method according to any one of claims 1 to 5,
**characterized in that**
variable-thickness coatings (5) are applied to cavity walls (2) of several cavities (1), wherein the variable-thickness coatings (5) are designed such that cavity diameters (D) of the coated cavities (1) substantially correspond to each other.

7. Method according to any one of claims 1 to 6,
**characterized in that**
- with the measuring device (10) several diameter values (D1, D2; D3, D4) of the first cavity (1) are recorded at different heights of the first cavity (1) before and after application of a coating (5),
- from these diameter values (D1, D2; D3, D4) before and after application of a coating (5) a height-dependent coating thickness (6) is determined,
- the coating lance (20) is actuated such that with this a variable-thickness coating (5A) is applied to a wall (2A) of the second cavity (1A), the thickness of the said variable-thickness coating being dependent on the determined height-dependent coating thickness (6).

8. Method according to any one of claims 1 to 7,
**characterized in that**
- initially several diameter values (D1, D2) are measured on the first cavity (1) before a coating (5) is applied thereto,
- the variable-thickness coating (5) is applied to the same first cavity (1), wherein its height-dependent thickness (6) is chosen depending on the diameter values (D1, D2) before application of the coating (5),
- several diameter values (D3, D4) are measured on the first cavity (1) after the coating (5) has been applied to its wall (2),
- from the diameter values (D1, D2; D3, D4) before and after application of the coating (5) a height-dependent coating thickness (6) is determined,
- with the determined height-dependent coating thickness (6) a difference to a desired height-dependent coating thickness is calculated,
- the difference is taken into account during application of a coating (5A) to a subsequent cavity wall (2A).

9. Method according to any one of claims 1 to 8,
**characterized in that**
a variable-thickness coating (5) is produced **in that** a movement speed or particle ejection capacity of the coating lance (20) is varied.

10. Coating system for coating cavity walls (2), in particular cylinder bores of engine blocks, having
- a coating lance (20) for applying a coating (5) to a cavity wall (2) and
- a measuring device (10) for measuring a cavity diameter (D),
wherein electronic control means are provided and adapted
- to record with the measuring device (10) at least several diameter values (D1, D2) of a first cavity (1) at different heights of the first cavity (1),
**characterized in that**
the electronic control means are provided and adapted
- to apply with the coating lance (20) a variable-thickness coating (5) to a wall (2) of the same first cavity (1), the thickness (6) of the said variable-thickness coating being dependent on the diameter values (D1, D2) determined,
- so that the several diameter values (D1, D2) are measured on the first cavity (1) before the variable-thickness coating (5) is applied thereto and
- so that the thickness (6) of the variable-thickness coating (5) is chosen the thicker at a particular height of the first cavity (1) the larger the previously measured diameter value for this height is.

11. Coating system according to claim 10,
**characterized in that**
the electronic control means are adapted to carry out a method according to any one of claims 1 to 9.

## Revendications

1. Procédé de revêtement de parois d'espace creux (2), en particulier d'alésages de cylindre de blocs moteur, pour lequel
- avec une lance de revêtement (20), un revêtement (5) est appliqué sur une paroi d'espace creux (2) et
- avec un dispositif de mesure (10), un diamètre d'espace creux (D) est mesuré,
- dans lequel avec le dispositif de mesure (10), au moins plusieurs valeurs de diamètre (D1, D2) d'un premier espace creux (1) à différentes hauteurs du premier espace creux (1) sont mesurées,
**caractérisé en ce que**
- avec la lance de revêtement (20) sur une paroi (2) du même premier espace creux (1), un revêtement (5) à épaisseur variable est appliqué, dont l'épaisseur (6) dépend des valeurs de diamètre (D1, D2) déterminées,
- dans lequel les plusieurs valeurs de diamètre (D1, D2) sont mesurées sur le premier espace creux (1) avant que le revêtement (5) à épaisseur variable ne soit appliqué sur celui-ci et
- **en ce que** l'épaisseur (6) du revêtement (5) à épaisseur variable est choisie à une hauteur déterminée du premier espace creux (1) d'autant plus épaisse que la valeur de diamètre mesurée précédemment pour cette hauteur est grande.

2. Procédé selon la revendication 1,
**caractérisé en ce que**
un revêtement (5A) à épaisseur variable est appliqué avec la lance de revêtement (20) sur une paroi (2A) d'un second espace creux (1A) dont l'épaisseur (6) dépend des valeurs de diamètre (D1, D2) déterminées.

3. Procédé selon la revendication 1 ou 2,
**caractérisé en ce que**
plusieurs valeurs de diamètre (D3, D4) sont mesurées sur le premier espace creux (1) après qu'un revêtement (5) ait été appliqué sur sa paroi (2), et
**en ce qu'**un revêtement (5A) à épaisseur variable est appliqué sur une paroi (2A) d'un second espace creux (1A).

4. Procédé selon l'une des revendications 1 à 3,
**caractérisé en ce que**
le revêtement (5) à épaisseur variable est appliqué de sorte que son épaisseur variable (6) compense au moins partiellement des différences de valeurs de diamètre (D1, D2 ; D3, D4) à différentes hauteurs.

5. Procédé selon l'une des revendications 1 à 4,
**caractérisé en ce que**
le revêtement (5) à épaisseur variable est appliqué sur la paroi d'espace creux (2) de sorte que l'espace creux (1) revêtu présente un diamètre d'espace creux (D) largement constant.

6. Procédé selon l'une des revendications 1 à 5,
**caractérisé en ce que**
des revêtements (5) à épaisseur variable sont appliqués sur des parois d'espace creux (2) de plusieurs espaces creux (1), dans lequel les revêtements (5) à épaisseur variable sont réalisés de sorte que des diamètres d'espace creux (D) des espaces creux (1) revêtus concordent largement entre eux.

7. Procédé selon l'une des revendications 1 à 6,
**caractérisé en ce que**
- plusieurs valeurs de diamètre (D1, D2 ; D3, D4) du premier espace creux (1) sont enregistrées à différentes hauteurs du premier espace creux (1) avec le dispositif de mesure (10) avant et après l'application d'un revêtement (5),
- à partir de ces valeurs de diamètre (D1, D2 ; D3, D4), une épaisseur de revêtement (6) dépendant de la hauteur est déterminée avant et après l'application d'un revêtement (5),
- la lance de revêtement (20) est commandée de sorte qu'avec celle-ci sur une paroi (2A) du second espace creux (1A), un revêtement à épaisseur variable (5A) est appliqué, dont l'épaisseur dépend de l'épaisseur de revêtement (6) dépendant de la hauteur déterminée.

8. Procédé selon l'une des revendications 1 à 7,
**caractérisé en ce que**
- tout d'abord plusieurs valeurs de diamètre (D1, D2) sont mesurées sur le premier espace creux (1) avant que sur celui-ci, un revêtement (5) ne soit appliqué,
- le revêtement (5) à épaisseur variable est appliqué sur le même premier espace creux (1), dans lequel son épaisseur dépendant de la hauteur (6) est choisie selon les valeurs de diamètre (D1, D2) avant l'application du revêtement (5),
- plusieurs valeurs de diamètre (D3, D4) sont mesurées sur le premier espace creux (1), après que le revêtement (5) ait été appliqué sur sa paroi (2),
- une épaisseur de revêtement (6) dépendant de la hauteur est déterminée à partir des valeurs de diamètre (D1, D2 ; D3, D4) avant et après l'application du revêtement (5),
- une différence par rapport à une épaisseur de revêtement dépendant de la hauteur souhaitée est calculée avec l'épaisseur de revêtement (6) dépendant de la hauteur déterminée,
- la différence est prise en compte lors de l'application d'un revêtement (5A) sur une paroi d'espace creux (2A) suivante.

9. Procédé selon l'une des revendications 1 à 8,
**caractérisé en ce que**
un revêtement (5) à épaisseur variable est généré du fait qu'une vitesse de déplacement ou une puissance d'éjection de particules de la lance de revêtement (20) est variée.

10. Installation de revêtement pour le revêtement de parois d'espace creux (2), en particulier de alésages de cylindre de blocs moteur avec
- une lance de revêtement (20) pour l'application d'un revêtement (5) sur une paroi d'espace creux (2) et
- un dispositif de mesure (10) pour la mesure d'un diamètre d'espace creux (D), dans lequel des moyens de commande électroniques sont prévus et aménagés afin
- d'enregistrer avec le dispositif de mesure (10) au moins plusieurs valeurs de diamètre (D1, D2) d'un premier espace creux (1) à différentes hauteurs du premier espace creux (1),
**caractérisée en ce que**
les moyens de commande électroniques sont prévus et aménagés afin
- d'appliquer avec la lance de revêtement (20) sur une paroi (2) du même premier espace creux (1) un revêtement (5) à épaisseur variable, dont l'épaisseur (6) dépend des valeurs de diamètre (D1, D2) déterminées,
- **en ce que** les plusieurs valeurs de diamètre (D1, D2) sont mesurées sur le premier espace creux (1) avant que le revêtement (5) à épaisseur variable ne soit appliqué sur celui-ci, et
- **en ce que** l'épaisseur (6) du revêtement (5) à épaisseur variable est choisie sur une hauteur déterminée du premier espace creux (1) d'autant plus épaisse que la valeur de diamètre mesurée précédemment pour cette hauteur est grande.

11. Installation de revêtement selon la revendication 10,
**caractérisée en ce que**
les moyens de commande électroniques sont aménagés afin de réaliser un procédé selon l'une des revendications 1 à 9.
